# EUROPÄISCHE PATENTSCHRIFT

(11) **EP 0 379 966 B1**
(45) Veröffentlichungstag und Bekanntmachung des Hinweises auf die Patenterteilung: **12.10.1994**
(21) Anmeldenummer: 90100962.1
(22) Anmeldetag: 18.01.1990
(51) Int. Cl.: B29C 47/68

(54) **Siebvorrichtung zur Reinigung von Kunststoffschmelzen**
Filtering apparatus for cleaning plastics melts
Dispositif de filtrage pour la purification de matières plastiques fondues

(30) Priorität: 25.01.1989 DE 3902061
(43) Veröffentlichungstag der Anmeldung: 01.08.1990
(73) Patentinhaber: GNEUSS KUNSTSTOFFTECHNIK GMBH, D-32549 Bad Oeynhausen (DE)
(72) Erfinder: Gneuss, Detlef, Dipl.-Ing., D-4970 Bad Oeynhausen (DE)
(74) Vertreter: Stracke, Alexander, Dipl.-Ing.

(56) Entgegenhaltungen:
- DE-A- 2 407 663
- DE-A- 3 716 707
- FR-A- 2 249 526
- US-A- 2 838 084

## Beschreibung

Aus der DE-PS 34 43 654 ist eine Siebvorrichtung zur Reinigung von Kunststoffschmelzen bei einer Hochdruckpresse bekannt, die aus einem Gehäuse mit einer einen Teil des Fließkanales der Hochdruckpresse bildenden Durchflußbohrung und einer im Gehäuse über einen Antrieb taktweise verschiebbaren oder drehbaren Platte oder Scheibe mit mehren Durchbrüchen besteht, wobei ständig mindestens einer der Durchbrüche im Bereich der Durchflußbohrung und ständig mindestens einer der Durchbrüche außerhalb des Gehäuses liegt, wobei innerhalb der Durchbrüche Siebscheiben angeordnet sind.

Konkret zeigt die DE- PS 34 43 654 eine derartige Siebvorrichtung, bei der innerhalb des Gehäuses eine drehbare Scheibe mit innerhalb der Durchbrüche angeordneten Siebscheiben vorgesehen ist.

Aus der DE-AS 21 53 962 ist eine Siebvorrichtung bekannt, bei der innerhalb des Gehäuses eine verschiebbare Platte mit Siebscheiben aufweisenden Durchbrüchen verwirklicht ist.

Der grundsätzliche Vorteil der vorstehend geschilderten Siebvorrichtungen liegt darin, daß ein kontinuierliches Wechseln der wirksamen Siebscheiben möglich ist und daß ein Austausch stark verschmutzter Siebscheiben relativ einfach möglich ist.

Letzteres liegt daran, daß mindestens einer der Durchbrüche und damit auch die darin angeordnete Siebscheibe ständig außerhalb des Gehäuses liegt und damit für einen Wechsel frei zugänglich ist.

Bei der Siebvorrichtung nach der DE-PS 34 43 654 wird im Falle der Verschmiuzung der im Schmelzekanal befindlichen Siebscheibe und des damit einhergehenden Druckanstieges im Schmelzekanal die mit mehreren Durchbrüchen nebst darin angeordneten Siebscheiben ausgestattete Platte oder Scheibe geringfügig weiterverschoben oder weitergedreht, so daß ein Teil der verschmutzten Siebscheibe aus dem Schmelzekanal herausfährt und ein neuer, unverschmutzter Teil einer Siebscheibe neu in den Bereich des Schmelzekanals gelangt. Damit ist wieder ein größerer, unverschmutzter Siebscheibenanteil innerhalb des Schmelzekanales gegeben und die Druckverhältnisse können sich wieder normalisieren. Sobald bei zunehmender Verschmutzung wieder eine Erhöhung des Schmelzedruckes ermittelt wird, erfolgt ein weiterer Antrieb der Platte oder Scheibe mit dem vorstehend genannten Effekt. Dies bedeutet, daß die Konstanthaltung des Druckes im Schmelzekanal durch fortwährendes Einführen unverschmutzter Siebscheibenbereiche in den Schmelzekanal bewirkt wird.

Diejenigen Siebscheiben, die den Schmelzekanal bereits durchlaufen haben, sind entsprechend verschmutzt. Grundsätzlich können nun diese verschmutzten Siebe oder Siebscheiben vollständig ausgetauscht und durch neue oder gereinigte Siebe bzw. Siebscheiben ersetzt werden.

Aus der DE-A-37 16 707 ist eine Siebvorrichtung zur Reinigung von Kunststoffschmelzen bekannt, bei der in einem Gehäuse mit einer einen Teil des Fließkanales einer Hochdruckpresse bildenden Durchflußbohrung eine Siebtrommel drehbar gelagert ist. Ein Teilabschnitt dieser Siebtrommel befindet sich ständig im Bereich der Durchflußbohrung und ein anderer Teil der Siebtrommel liegt ständig außerhalb des Bereiches der Durchflußbohrung. Dieser außerhalb der Durchflußbohrung liegende und noch im Gehäuse befindliche Bereich der Siebtrommel kann durch einen von der Durchflußbohrung abgezweigten Spülstart im Gegenspülverfahren gereinigt werden.

Aus der US-A-23 88 084 ist eine Siebvorrichtung bekannt, bei der innerhalb des Gehäuses eine Platte oder Scheibe mit mehreren Durchbrüchen angeordnet ist, wobei innerhalb der Durchbrüche Siebscheiben angeordnet sind. Die Platte oder Scheibe kann innerhalb des Gehäuses verschoben oder gedreht werden, so daß nach einer Verschmutzung der jeweils genutzten Siebscheibe eine saubere Siebscheibe in den Bereich der Durchflußbohrung gebracht werden kann.

Der vorliegenden Erfindung liegt die Aufgabe zugrunde, eine Siebvorrichtung zur Reinigung von Kunststoffschmelzen bei einer Hochdruckpresse zu schaffen, die eine verlängerte Nutzungsdauer der verwendeten Siebscheibe ermöglicht.

Diese Aufgabe wird gelöst durch eine Siebvorrichtung mit den Merkmalen des Patentanspruches 1.

Eine derart aus gestaltete Siebvorrichtung ermöglicht das kontinuierliche Reinigen der Siebscheiben im ansich bekannten Gegenspülverfahren. Vorteilhaft ist hierbei allerdings, daß der Reinigungsvorgang praktisch keinerlei Beeinträchtigung des Produktionsprozesses mitsichbringt. Das Filtrieren der Schmelze im Schmelzekanal, die Reinigung der Siebscheiben im Gegenspülverfahren sowie die Entnahme von Siebscheiben zum Zwecke der Auswechselung erfolgen an verschiedenen Stellen der gesamten Vorrichtung, so daß sich diese Vorgänge gegenseitig nicht beeinflussen. Die Freigabe bzw. Absperrung des Spülkanales ist mit dem Antrieb der Platte oder der Scheibe synchronisiert. Synchronisiert heißt im Zusammenhang mit der vorliegenden Erfindung, daß die Anzahl der Reinigungsvorgänge der Anzahl der Bewegungen der Platte oder Scheibe entspricht. Das Freigeben der Spüldüse kann dabei durchaus zeitversetzt gegenüber dem Antriebsvorgang der Scheibe oder Platte stattfinden. Die Freigabedauer der Spüldüse kann zeitlich an die Einschaltzeit des Antriebes der Platte oder Scheibe angeglichen, ebenso gut aber auch losgelöst von der Einschaltdauer des besagten Antriebes festgelegt sein.

Insgesamt ergibt sich, daß immer lediglich ein kleiner Bereich einer zu reinigenden Siebscheibe gereinigt wird und demzufolge auch lediglich eine immer nur kurze Öffnung des Spülkanales erforderlich ist. Dies liegt daran, daß die Platte oder Scheibe in relativ kleinen Schritten verschoben oder gedreht wird, abhängig vom Verschmutzungszustand der innerhalb der Durchflußbohrung im Einsatz liegenden Siebscheiben. Bei zunehmendem Verschmutzungsgrad und dabei sich einstellender Druckerhöhung werden Schaltimpulse zum Weitertransport der Platte oder Scheibe gegeben, sooft, bis die gewünschten Druckverhältnisse sich wieder eingestellt haben. Während dieser Phase wird auch jeweils der Spülkanal freigegeben und entsprechend Abschnittsweise eine Siebscheibe gereinigt.

Bei der erfindungsgemäßen Siebvorrichtung wird somit pro Reinigungstakt immer nur für kurze Zeit eine Öffnung der Spüldüse vorgenommen. Ein kurzer Schmelzestromimpuls, der auf einen schmalen Spalt der Siebscheibe einwirkt, sorgt für eine extrem gute Siebreinigung dadurch, daß kurzzeitig eine hohe Druckdifferenz an der Siebscheibe entsteht. Damit wird der Schmutzkuchen schlagartig belastet und von der Siebscheibe abgehoben. Die verbleibende Druckdifferenz wird für das Fließen benötigt und für den Abtransport des Schmutzkuchens. Dabei liegt die zu reinigende Siebscheibe jeweils außerhalb des Schmelzekanales.
Die Reinigung von Siebscheiben im Gegenspülverfahren ist beispielsweise aus der US-PS 31 46 494 bekannt. Bei der dort beschriebenen Siebvorrichtung befindet sich die zu reinigende Siebscheibe ständig im Schmelzekanal.

Die ständig im Schmelzekanal befindliche Siebscheibe bei der Konstruktion nach der US-PS 31 46 494 ist mit einem stegartigen Bereich ausgestattet, der keinerlei Durchbrechungen oder Bohrungen aufweist. Auf der in Fließrichtung der Schmelze gesehen vor der Siebscheibe liegenden Seite ist eine schlitzartige Reinigerhülse angeordnet, die sich normalerweise in dem undurchbrochenen Bereich der Siebscheibe befindet. Im Falle einer registrierten Verschmutzung der Siebscheibe soll die Reinigerhülse gedreht werden, so daß im Gegenspülverfahren eine Reinigung des wirksamen Siebscheibenbereiches erfolgen kann.

Die Reinigungswirkung einer derartigen Konstruktion ist vergleichsweise gering, da sich der Druckunterschied auf den beiden Seiten der zu reinigenden Siebscheibe nach dem Einlauf der Reinigerhülse in den durchbrochenen Bereich der Siebscheibe sehr schnell abbaut, so daß die Wirkung des Gegenspülvorganges vergleichsweise gering ist. Der zur Verfügung stehende Differenzdruck wird ausschließlich zum Fließen der Schmelze verbraucht. Der Schmutzkuchen wird zum Strömungswiderstand und je nach Größe des verbleibenden Fließdruckes werden die Strömungswiderstände, d.h., die Verschmutzung bzw. der Schmutzkuchen, beseitigt oder nicht.

Da durch das Gegenspülen der Siebscheiben mit Kunststoffschmelze eine vollständige und komplette Reinigung nicht möglich ist, ist in gewissen Zeitabständen eine vollständige Auswechslung und Komplettreinigung der Siebscheiben erforderlich. Ein Wechseln oder Weitertransportieren dieser Siebscheibe bei der Konstruktion nach der US-PS 31 46 494 im Sinne der erfindungsgemäßen Siebvorrichtung ist hier allerdings nicht möglich. Es ist allenfalls möglich, die gesamte Anlage stillzusetzen und dann während der Stillstandszeit das Sieb auszutauschen.

Durch die Gesamtkonzeption der erfindungsgemäßen Siebvorrichtung ist hingegen ein Austauschen und Reinigen der Siebe oder Siebscheiben ohne Probleme möglich. Da eine segmentweise Reinigung der Siebe oder Siebscheiben durchgeführt wird, erfolgt eine kontinuierliche Reinigung. Die Nutzungsdauer der Siebe oder Siebscheiben wird hierdurch verlängert, ebenso werden die Zeitabstände, innerhalb derer die Siebe oder Siebscheiben zu wechseln sind, beträchtlich verlängert.

Weitere Merkmale der Erfindung sind Gegenstand von Unteransprüchen.

In den beigefügten Zeichnungen sind Ausführungsbeispiele der Erfindung dargestellt, welche im folgenden näher beschrieben werden. Es zeigen:
- Fig. 1: eine schematische Darstellung einer Hochdruckpresse mit einer Siebvorrichtung und einem nachgeschalteten Werkzeug
- Fig. 2: eine perspektivische Darstellung einer Siebvorrichtung zur Reinigung von Kunststoffschmelzen, teilweise im Schnitt gezeigt
- Fig. 3: eine in Durchflußrichtung der Kunststoffschmelze gesehene Ansicht einer Siebvorrichtung zur Reinigung von Kunststoffschmelzen nach einem weiteren Ausführungsbeispiel der Erfindung
- Fig. 4: einen Teilschnitt nach der Linie IV-IV in Fig. 3
- Fig. 5: einen der Fig. 4 entsprechenden Teilschnitt durch eine Siebvorrichtung nach einem weiteren

### Ausführungsbeispiel der Erfindung.

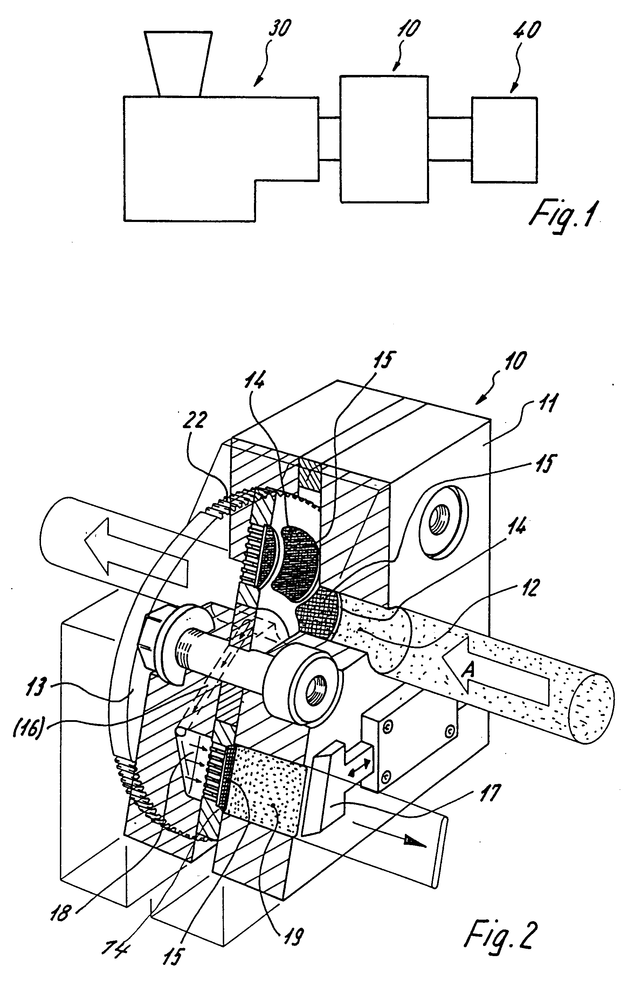

In Fig. 1 ist mit dem Bezugszeichen 30 eine Hochdruckpresse bezeichnet, die Kunststoffgranulat plastifiziert und diese Kunststoffschmelze einem Werkzeug 40 zuführt.

Innerhalb des gesamten Schmelzekanales ist eine Siebvorrichtung zur Reinigung der Kunststoffschmelze angeordnet, die insgesamt das Bezugszeichen 10 trägt.

Wie Fig. 2 deutlich zeigt, besteht eine derartige Siebvorrichtung 10 im wesentlichen aus einem Gehäuse 11 mit einer einen Teil des Fließkanales der Hochdruckpresse 30 bildenden Durchflußbohrung 12, die in das Werkzeug 40 einmündet und einer im Gehäuse 11 drehbaren Scheibe 13 mit mehreren Durchbrüchen 14, von denen mindestens einer ständig im Bereich der Durchflußbohrung 12 und mindestens einer ständig außerhalb des Gehäuses 11 liegt. Im Bereich der Durchbrüche 14 sind in bekannter Weise Siebscheiben 15 angeordnet.

In Fig. 2 ist durch den Pfeil A die Durchflußrichtung der zu reinigenden Kunststoffschmelze angegeben.

Wie Fig. 2 deutlich macht, ist die Siebvorrichtung 10 so gestaltet, daß mehrere Durchbrüche 14 ständig außerhalb der Durchflußbohrung 12, aber noch vollständig innerhalb des Gehäuses 11 liegen. Auf der in Fließrichtung der Kunststoffschmelze gesehen hinter der Scheibe 13 liegenden Seite der Durchflußbohrung 12 ist ein Spülkanal 16 vorgesehen, der in eine schlitzartige Spüldüse 18 einmündet. Diese Spüldüse 18 liegt im Durchlauf bereich eines ständig außerhalb der Durchflußbohrung 12, aber noch innerhalb des Gehäuses 11 liegenden Durchbruches 14. Die Längserstreckung dieser Spüldüse 18 entspricht der Größe einer Siebscheibe 15.

Auf der der Spüldüse 18 gegenüberliegenden Seite der Scheibe 13 ist innerhalb des Gehäuses 11 ein Austrittskanal 19 vorgesehen, der vorzugsweise in einer Flucht mit der Spüldüse 18 liegt. Der Austrittskanal 19 ist vorteilhafterweise in Übereinstimmung mit der Spüldüse 18 schlitzartig ausgebildet.

Die Austrittsöffnung des Austrittskanales 19 ist durch eine Absperreinrichtung in Form eines Absperrschiebers 17 verschließbar.

Dieser Absperrschieber 17 ist vor die Austrittsöffnung des Austrittskanales 19 geschoben, so daß dieser verschlossen ist. Damit ist selbstverständlich auch der Spülkanal 16 und die Spüldüse 18 strömungstechnisch abgesperrt.

Die Scheibe 13 ist in bekannter Weise über einen in Fig. 2 nicht dargestellten Antrieb drehbar.

Zu diesem Zweck ist die Scheibe 13 außenseitig mit einer Verzahnung 22 versehen. Der Antrieb der Scheibe 13 wird immer dann eingeschaltet, wenn sich innerhalb der Durchflußbohrung 12 durch zunehmende Verschmutzung einer darin befindlichen Siebscheibe 15 ein unerwünschter Druckanstieg einstellt. Die Scheibe 13 und damit auch die Siebscheiben werden dann soweit weiterbewegt, daß wieder genügend saubere Siebfläche in der Durchflußbohrung 12 liegt, um einen gewünschten Druck in der Durchflußbohrung 12 zu halten.

Der Absperrschieber 17 ist mit dem Antrieb für die Scheibe 13 synchronisiert, d.h., jedesmal dann, wenn die Scheibe 13 um einen vorbestimmten Winkelbetrag gedreht wird, wird der Absperrschieber 17 zur Freigabe des Spülkanales 16, der Spüldüse 18 und dem Austrittskanal 19 in seine aus Fig. 2 ersichtliche Stellung zurückgezogen. Dies kann gegenüber dem Einschaltzeitpunkt des Antriebes für die Scheibe 13 zeitgleich oder zeitversetzt erfolgen. Synchronisieren des Absperrschiebers 17 mit dem Antrieb für die Scheibe 13 bedeutet im vorliegenden Zusammenhang also, daß ein quantitativer Zusammenhang zwischen dem Einschalten des Antriebes für die Scheibe 13 und der Betätigung des Absperrschiebers 17 besteht.

Ist der Spülkanal 16, die Spüldüse 18 und der Austrittskanal 19 freigegeben, so läuft Schmelze durch den Spülkanal 16 sowie die Spüldüse 18 und beaufschlagt die jeweils gegenüberliegende Siebscheibe 15 in umgekehrter Richtung, als dies bei der in der Durchflußbohrung 12 befindlichen Siebscheibe 15 der Fall ist. Dabei werden auf der dem Austrittskanal 19 zugewandten Seite der Siebscheibe 15 abgesetzte Schmutzpartikel abgespült und gemeinsam mit der austretenden Kunststoffschmelze aus den Austrittskanal 19 herausgeführt.

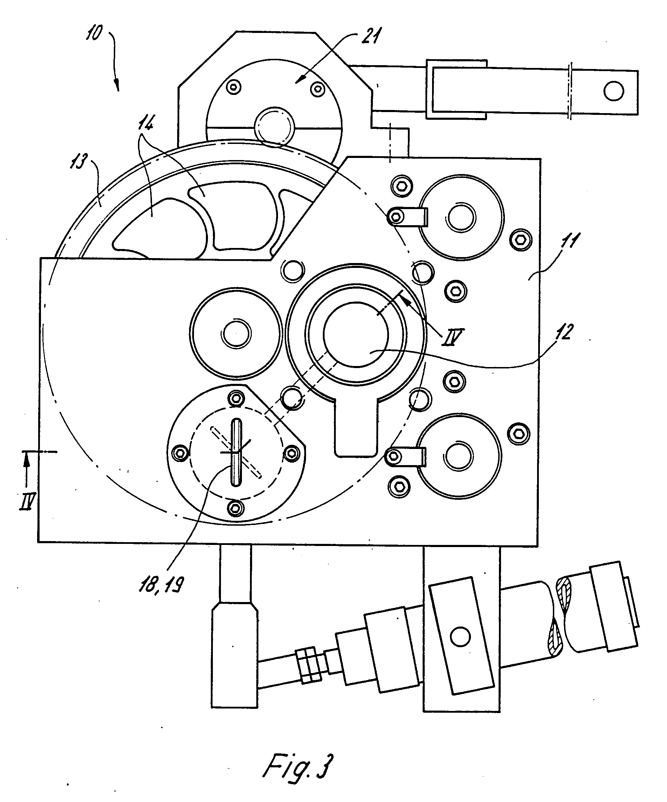

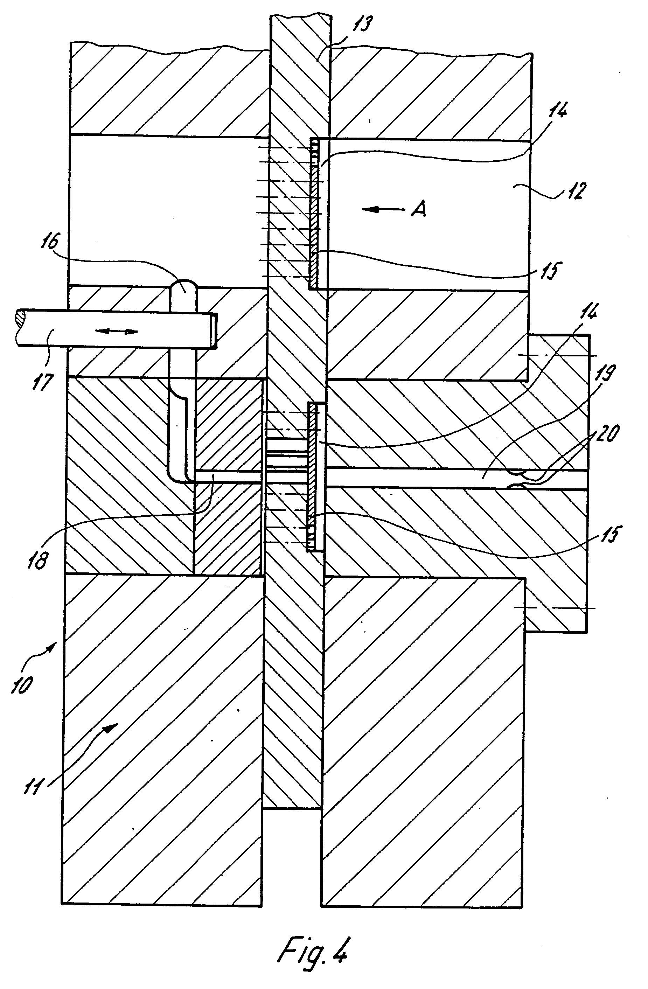

In den Fig. 3 und 4 ist ein weiteres Ausführungsbeispiel der Erfindung gezeigt. Bei diesem Ausführungsbeispiel sind die mit den Teilen des Ausführungsbeispieles nach Fig. 2 übereinstimmenden Bauteile mit gleichen Bezugszeichen versehen.

Unter Bezugnahme auf diese Fig. 3 und 4 ist festzustellen, daß die Siebvorrichtung 10 wieder im wesentlichen aus einem Gehäuse 11 mit einer einen Teil des Fließkanales der Hochdruckpresse bildenden Durchflußbohrung 12 und einer im Gehäuse drehbaren Scheibe 13 mit mehreren Durchbrüchen 14, von denen mindestens einer ständig im Bereich der Durchflußbohrung 12 und mindestens einer ständig außerhalb des Gehäuses 11 liegt, besteht. Im Bereich der Durchbrüche 14 sind in bekannter Weise wieder Siebscheiben 15 angeordnet.

In Fig. 4 ist durch den Pfeil A wieder die Durchflußrichtung der zu reinigenden Kunststoffschmelze angegeben.

Wie sich aus den Fig. 3 und 4 ergibt, ist die Siebvorrichtung 10 so gestaltet, daß mehrere Durchbrüche 14 ständig außerhalb der Durchflußbohrung 12, aber noch vollständig innerhalb des Gehäuses 11 liegen. Auf der in Fließrichtung der Kunststoffschmelze gesehen hinter der Scheibe 13 liegenden Seite der Durchflußbohrung 12 ist ein Spülkanal 16, vorgesehen, der beispielsweise über eine Absperreinrichtung in Form eines Absperrbolzens 23 verschließbar ist. Hier liegt der Absperrbolzen 23 unmittelbar im Bereich des Spülkanales 16.

Der Spülkanal 16 mündet wieder in eine Spüldüse 18 ein, welche im Durchlaufbereich eines ständig außerhalb der Durchflußbohrung 12, aber noch innerhalb des Gehäuses 11 liegenden Durchbruches 14 angeordnet ist. Die Längserstreckung dieser Spüldüse 18, die wiederum schlitzartig ausgebildet ist, entspricht der Größe einer Siebscheibe 15.

Auf der der Spüldüse 18 gegenüberliegenden Seite der Scheibe 13 ist innerhalb des Gehäuses 11 ein Austrittskanal 19 vorgesehen, der vorzugsweise in einer Flucht mit der Spüldüse 18 liegt. Der Austrittskanal 19 ist vorteilhafterweise in Übereinstimmung mit der Spüldüse 18 schlitzartig ausgebildet.

Innerhalb dieses Austrittskanales 19 ist eine verstellbare Drossel 20 angeordnet, deren Sinn weiter unten noch erläutert wird.

Wie Fig. 3 zeigt, ist die Scheibe 13 über einen Antrieb 21 drehbar.

Es handelt sich hierbei um den gleichen Antrieb 21, über den auch die Scheibe 13 gemäß Ausführungsbeispiel nach Fig. 2 drehbar ist.

Der Antrieb 21 wird immer dann eingeschaltet und damit auch die Scheibe 13 gedreht, wenn sich innerhalb der Durchflußbohrung 12 durch zunehmende Verschmutzung einer darin befindlichen Siebscheibe 15 ein unerwünschter Druckanstieg einstellt. Die Scheibe 13 und damit auch die Siebscheiben 15 werden dann soweit weiterbewegt, daß wieder genügend saubere Siebfläche in der Durchflußbohrung 12 liegt, um einen gewünschten Druck in der Durchflußbohrung 12 zu halten.

Mit diesem Antrieb 21 ist wiederum die Absperreinrichtung in Form des schon erwähnten Absperrbolzens 23 in der weiter oben beschriebenen Art synchronisiert.

Ist der Spülkanal 16 freigegeben, so läuft Schmelze durch diesen Spülkanal 16 und die Spüldüse 18 beaufschlagt die jeweils gegenüberliegende Siebscheibe 15 in umgekehrter Richtung, als dies bei der in der Durchflußbohrung 12 befindlichen Siebscheibe 15 der Fall ist. Dabei werden auf der dem Austrittskanal 19 zugewandten Seite der Siebscheibe 15 abgesetzte Schmutzpartikel abgedrückt, abgespült und gemeinsam mit der austretenden Kunststoffschmelze aus dem Austrittskanal 19 herausgeführt.

Die schon weiter oben erwähnte, einstellbare Drossel 20 ermöglicht es, die Druckverhältnisse im Austrittskanal 19 in ein optimales Verhältnis zu den Druckverhältnissen auf der gegenüberliegenden Seite, d.h., im Bereich der Spüldüse 18, einzustellen. Es sollte nämlich auf der Seite des Austrittskanales 19 ein definierter Gegendruck zu den Verhältnissen auf der Seite der Spüldüse 18 herrschen.

Die erwähnte Synchronisation der Absperreinrichtung mit dem Antrieb 21 für die Scheibe 13 ist für einen Fachmann ohne weiteres auf verschiedenen Wegen möglich, sei es durch mechanische, durch pneumatische oder durch elektrische Steuer- oder Koppelelemente.

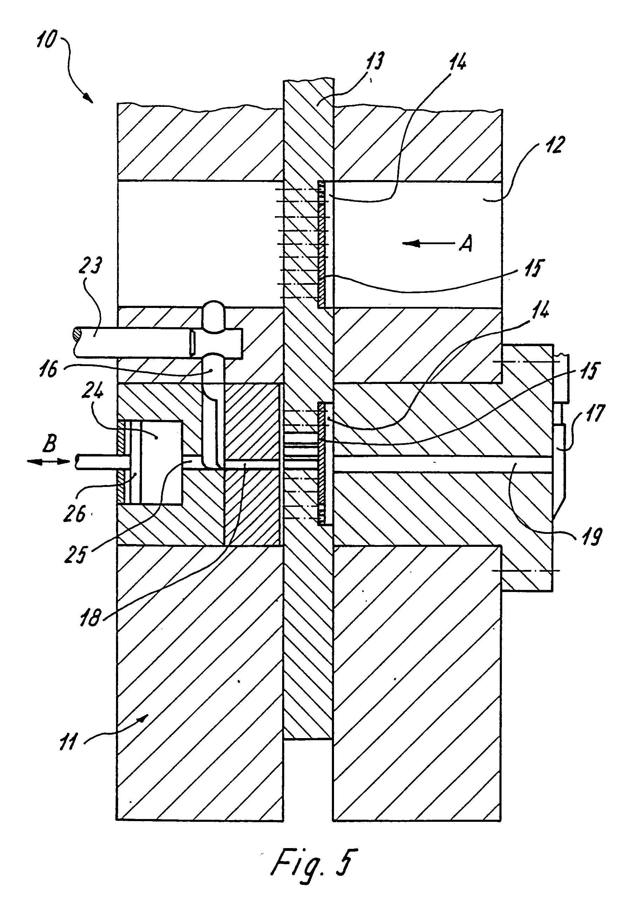

In Fig. 5 ist ein Ausführungsbeispiel der Erfindung gezeigt, welches in Übereinstimmung mit dem Ausführungsbeispiel nach Fig. 2 einen Absperrschieber im Bereich der Austrittsöffnung des Austrittskanales 19 aufweist.

Darüber hinaus ist ein Absperrbolzen 23 im Bereich des Spülkanales 16 vorgesehen.

Der Absperrschieber 17 ist analog dem Ausführungsbeispiel nach Fig. 2 mit dem Antrieb 21 (in Fig. 5 nicht gezeigt) für die Scheibe 13 synchronisiert.

Wie Fig. 5 deutlich zeigt, ist im Übergangsbereich vom Spülkanal 16 zur Spüldüse 18 eine Zylinderkammer 24 angeordnet, die über eine Bohrung 25 in Verbindung mit dem Spülkanal 16 und der Spüldüse 18 steht. In dieser Zylinderkammer 24 ist ein Kolben 26 im Sinne des Doppelpfeiles B hin- und herbeweglich gelagert.

Die Funktion der Siebvorrichtung 10 gemäß dem Ausführungsbeispiel nach Fig. 5 ist nun folgende:
Der Austrittskanal 19 ist
in bekannter Weise durch den Absperrschieber 17 verschlossen. Dabei ist der zusätzliche Absperrbolzen 23 vorzugsweise aus dem Spülkanal 16 herausgezogen, so wie in Fig. 5 gezeigt. Der Kolben 26 befindet sich in seiner in Fig. 5 gezeigten, gegenüber dem Spülkanal 16 und der Spüldüse 18 zurückgezogenen Stellung. In dieser Ausgangslage befindet sich innerhalb des Spülkanales 16, der Zylinderkammer 24, der Bohrung 25, der Spüldüse 18 und dem Austrittskanal 19 flüssige Kunststoffschmelze, die unter dem gleichen Druck steht wie innerhalb des Schmelzekanales 12.

Wird nun über den in Fig. 5 nicht gezeigten Antrieb 21 eine Bewegung bzw. Drehung der Scheibe 13 eingeleitet, so wird zunächst der zusätzliche Absperrbolzen 23 in den Spülkanal 16 hineinbewegt, so daß dieser gegenüber dem Schmelzekanal 12 abgesperrt ist. Unmittelbar danach wird der Kolben 26 in Richtung der Spüldüse 18 bewegt, d.h., der Druck der im Spülkanal 16, der Zylinderkammer 24, der Bohrung 25, der Spüldüse 18 und dem Austrittskanal 19 befindlichen Kunststoffschmelze wird je nach Belastung des Kolbens 26 beträchtlich erhöht. Erst dann wird der Absperrschieber 17 impulsartig geöffnet, so daß für den Reinigungszweck der Siebscheibe 15 ein höheres Druckgefälle zur Verfügung steht als bei der reinen Ausnutzung des Schmelzedruckes im Schmelzekanal 12. Durch die zusätzliche Druckerhöhung durch den Kolben 26 kann der Reinigungseffekt beträchtlich erhöht werden.

Der generelle Vorteil der Reinigungseinrichtung der vorstehend beschriebenen Siebvorrichtungen 10 liegt darin, daß jede Siebscheibe 15 ebenso sukzessive gereinigt wird wie eine Siebscheibe 15 durch die Durchflußbohrung 12 hindurchgeführt wird. Dies bedeutet, daß immer nur für kurze Zeit und ohne nennenswerte Veränderung der Druckverhältnisse im Bereich der Durchflußbohrung 12 eine Freigabe des Spülkanales 16 erfolgt.

Die Schlitzbreite der Spüldüse 18 ist - bezogen auf die Größe der zu reinigenden Siebscheiben 15 - relativ gering. Die Schlitzbreite kann zwischen 0,5 und 15 mm liegen. Die Schlitzbreite der Spüldüse 18 kann vorteilhafterweise so gewählt werden, daß sie in etwa dem Maß des Siebscheibenvorschubtaktes entspricht.

## Patentansprüche

1. Siebvorrichtung (10) zur Reinigung von Kunststoffschmelzen bei einer Hochdruckpresse, bestehend aus einem Gehäuse (11) mit einer einen Teil des Fließkanals der Hochdruckpresse (30) bildenden Durchflußbohrung (12) und einer im Gehäuse (11) über einen Antrieb (21) taktweise verschiebbaren oder drehbaren Platte oder Scheibe (13) mit mehreren Durchbrüchen (14), von denen ständig mindestens einer im Bereich der Durchflußbohrung (12) und ständig mindestens einer außerhalb des Gehäuses (11) liegt, wobei innerhalb der Durchbrüche (14) Siebscheiben (15) angeordnet sind und auf der in Fließrichtung gesehen hinter der Platte oder Scheibe (13) liegenden Seite der Durchflußbohrung innerhalb des Gehäuses (11) ein absperrbarer Spülkanal (16) vorgesehen ist, der in eine schlitzartige, im Durchlaufbereich eines vollständig außerhalb der Durchflußbohrung (12), aber noch vollständig innerhalb des Gehäuses (11) liegenden Durchbruches (14) angeordnete Spüldüse (18) einmündet, deren Schlitzbreite etwa dem Maß des Siebscheibenvorschubtaktes entspricht, und auf der der Sprühdüse (18) gegenüberliegenden Seite der Platte oder der Scheibe (13) im Gehäuse (11) ein Austrittskanal (19) vorgesehen ist und der Spülkanal (16) oder der Austrittskanal (19) mit einer mit dem Antrieb (21) der Platte oder Scheibe (13) synchronisierten Absperreinrichtung ausgestattet ist.

2. Siebvorrichtung nach Anspruch 1, dadurch gekennzeichnet, daß im Bereich des Austrittskanales (19) eine einstellbare Drossel (20) vorgesehen ist.

3. Siebvorrichtung nach Anspruch 1 oder 2, dadurch gekennzeichnet, daß die Absperreinrichtung aus einem quer zum Spülkanal (16) vor- und zurückbewegbaren Absperrbolzen (23) besteht.

4. Siebvorrichtung nach einem oder mehreren der Ansprüche 1 bis 3, dadurch gekennzeichnet, daß der Austrittskanal (19) entsprechend der Spüldüse (18) schlitzartig ausgebildet ist.

5. Siebvorrichtung nach einem oder mehreren der Ansprüche 1 bis 3, dadurch gekennzeichnet, daß die Schlitzbreite der Spüldüse (18) etwa 0,5 bis 15 mm beträgt.

6. Siebvorrichtung nach Anspruch 1 und einem oder mehreren der Ansprüche 4 und 5, dadurch gekennzeichnet, daß die Absperreinrichtung aus einem quer zum Austrittskanal (19) vor- und zurückbewegbaren und vor der Austrittsöffnung des Austrittskanales (19) angeordneten Absperrschieber (17) besteht.

7. Siebvorrichtung nach Anspruch 6, dadurch gekennzeichnet, daß zusätzlich zu dem vor der Austrittsöffnung des Austrittskanales (19) angeordneten Absperrschiebers (17) im Spülkanal (16) ein Absperrbolzen (23) angeordnet ist, daß im Bereich von Spülkanal (16) und Spüldüse (18) im Gehäuse (11) eine Zylinderkammer (24) vorgesehen ist, die über eine Bohrung (25) in Verbindung mit dem Spülkanal (16) und der Spüldüse (18) steht und innerhalb derer ein Kolben (26) vor- und zurückbewegbar ist, so daß der Druck der im Spülkanal (16), der Zylinderkammer (24), der Bohrung (25), der Spüldüse (18) und dem Austrittskanal (19) befindlichen Kunststoffschmelze nach Schließen des Spülkanales (16) durch den zusätzlichen Absperrschieber (23) und vor dem Öffnung des Austrittskanales (19) durch Verschieben des Absperrschiebers (17) durch den Kolben (26) erhöht werden kann.

## Claims

1. A filtering apparatus (10) for cleaning plastics melts in a high-pressure press, comprising a housing (11) having a through-flow bore (12) forming a part of the flow passage of the high-pressure press (30) and a plate or disc (13) which is cyclically displaceable or rotatable in the housing (11) by way of a drive (21) and which has a plurality of through openings (14), of which at least one is constantly disposed in the region of the through-flow bore (12) and at least one is constantly disposed outside the housing (11), wherein filter plates (15) are arranged within the through openings (14) and disposed within the housing (11) on the side of the through-flow bore which is after the plate or disc (13) as viewed in the flow direction is a flushing passage (16) which can be shut off and which communicates with a slot-lee flushing nozzle (18) which is arranged in the passage region of a through opening (14) which is disposed completely outside the through-flow bore (12) but still completely within the housing (11), the width of the slot of said flushing nozzle approximately corresponding to the dimension of the filter plate advance cycle, and provided on the side of the plate or disc (13), that is opposite to the spray nozzle (18) in the housing (11) is a discharge passage (19) and the flushing passage (16) or the discharge passage (19) is provided with a shut-off device which is synchronised with the drive (21) of the plate or disc (13).

2. A filtering apparatus according to claim 1 characterised in that an adjustable throttle (20) is provided in the region of the discharge passage (19).

3. A filtering apparatus according to claim 1 or claim 2 characterised in that the shut-off device comprises a shut-off pin (23) which is reciprocatable transversely to the flushing passage (16).

4. A filtering apparatus according to one or more of claims 1 to 3 characterised in that the discharge passage (19) is of a slot-like configuration corresponding to the flushing nozzle (19).

5. A filtering apparatus according to one or more of claims 1 to 3 characterised in that the slot width of the flushing nozzle (18) is about 0.5 to 15 mm.

6. A filtering apparatus according to claim 1 and one or more of claims 4 and 5 characterised in that the shut-off device comprises a shut-off slider (17) which is arranged in front of the discharge opening of the discharge passage (19) and which is reciprocatable transversely to the discharge passage (19).

7. A filtering apparatus according to claim 6 characterised in that a shut-off pin (23) is arranged in the flushing passage (16) in addition to the shut-off slider (17) arranged in front of the discharge opening of the discharge passage (19), that provided in the region of the flushing passage (16) and the flushing nozzle (18) in the housing (11) is a cylinder chamber (24) which communicates by way of a bore (25) with the flushing passage (16) and the flushing nozzle (18) and within which a piston (26) is reciprocatable so that the pressure of the plastics melt disposed in the flushing passage (16), the cylinder chamber (24), the bore (25), the flushing nozzle (18) and the discharge passage (19) can be increased by the piston (26) after closure of the flushing passage (16) by the additional shut-off slider (23) and prior to opening of the discharge passage (19) by displacement of the shut-off slider (17).

## Revendications

1. Tamiseur (10) destiné à nettoyer des matières synthétiques fondues dans une presse à haute pression, constitué d'un boîtier (11) pourvu d'un perçage d'écoulement (12) formant une partie du canal d'écoulement de la presse à haute pression (30) et d'une plaque ou disque (13), mobile ou tournant de façon intermittente, par l'intermédiaire d'un entraînement (21) dans le boîtier (11), et présentant plusieurs perçages (14), dont au moins un se trouve continuellement dans la zone du perçage d'écoulement (12) et au moins un se trouve continuellement hors du boîtier (11), des cribles (15) se trouvant à l'intérieur des perçages (14) et, à l'intérieur du boîtier (11), du coté du perçage d'écoulement situé derrière la plaque ou disque (13), vu dans le sens de l'écoulement, un canal de lavage (16) susceptible d'être obturé étant prévu, qui débouche dans une buse de lavage (18) en forme de fente, se trouvant dans la zone de traversée d'un perçage (14) situé totalement à l'extérieur du perçage d'écoulement (12), mais encore totalement à l'intérieur du boîtier (11), buse dont la largeur de fente correspond approximativement à l'importance de la cadence d'avance dans les cribles, et un canal de sortie (19) étant prévu, dans le boîtier (11), du côté de la plaque ou du disque (13) opposé au gicleur (18), et le canal de lavage (16) ou le canal de sortie (19) étant équipé d'un dispositif d'obturation synchronisé avec l'entraînement (21) de la plaque ou disque (13).

2. Tamiseur selon la revendication 1, caractérisé en ce qu'un étranglement (20) réglable est prévu dans la zone du canal de sortie (19).

3. Tamiseur selon la revendication 1 ou 2, caractérisé en ce que le dispositif d'obturation est constitué par un doigt d'obturation (23) pouvant avancer et reculer perpendiculairement au canal de lavage (16).

4. Tamiseur selon l'une ou plusieurs des revendications 1 à 3, caractérisé en ce que, comme la buse de lavage (18), le canal de sortie (19) a une forme de fente.

5. Tamiseur selon l'une ou plusieurs des revendications 1 à 3, caractérisé en ce que la largeur de fente de la buse de lavage (18) est environ de 0,5 à 15 mm

6. Tamiseur selon la revendication 1 et l'une ou plusieurs des revendications 4 et 5, caractérisé en ce que le dispositif d'obturation est constitué par un coulisseau d'obturation (17) pouvant avancer et reculer perpendiculairement au canal de sortie (19) et situé avant l'ouverture de sortie du canal de sortie (19).

7. Tamiseur selon la revendication 6, caractérisé en ce que, en supplément du coulisseau d'obturation (17) situé avant l'ouverture de sortie du canal de sortie (19), un doigt d'obturation (23) est monté dans le canal de lavage (16), et en ce que, dans la zone du canal de lavage (16) et de la buse de lavage (18), un cylindre (24) est prévu dans le boitier (11), cylindre qui est relié, par l'intermédiaire d'une ouverture (25), avec le canal de lavage (16) et la buse de lavage (18) et à l'intérieur duquel un piston (26) est susceptible d'avancer et de reculer, de telle sorte que la pression des matières synthétiques fondues se trouvant à l' intérieur du canal de lavage (16), du cylindre (24), de l'ouverture (25), de la buse de lavage (18) et du canal de sortie (19) puisse être augmentée par le piston (26) après l'obturation du canal de lavage (16) par le coulisseau d'obturation (23) supplémentaire, et avant l'ouverture du canal de sortie (19) résultant du déplacement du coulisseau d'obturation (17).
